# EUROPEAN PATENT APPLICATION

(11) **EP 1 429 325 A1**
(43) Date of publication of application: **16.06.2004**
(21) Application number: 02763015.1
(22) Date of filing: 06.09.2002
(51) Int. Cl.: G11B 7/26

(54) **OPTICAL RECORDING MEDIUM MANUFACTURING METHOD**

(30) Priority: 13.09.2001 JP 2001278557
(71) Applicant: TDK Corporation, Tokyo 103-8272 (JP)
(72) Inventor: KOMAKI, Tsuyoshi TDK Corporation, Tokyo 103-8272 (JP); USAMI, Mamoru TDK Corporation, Tokyo 103-8272 (JP)
(74) Representative: Kilian, Helmut, Dr.
(86) International application number: PCT/JP2002/009134
(87) International publication number: WO 2003/025927

(57) **Abstract**

The present invention provides a method for manufacturing an optical recording medium by forming a light-transmitting layer employing a photo-curable resin, yet affording superior mechanical properties. The present invention also provides an apparatus for manufacturing an optical recording medium suitable for use in the above-mentioned method. A method for manufacturing an optical recording medium (1) having, on a supporting substrate (2), at least one recording layer (5) and a light-transmitting layer (7) on the recording layer (5), comprising the steps of providing an energy ray-curable resin layer on the recording layer (5), and irradiating the resin layer with an energy ray at least twice to form the light-transmitting layer (7).

## Description

### TECHNICAL FIELD

The present invention relates to a method for manufacturing an optical recording medium and, more particularly, to a method for manufacturing an optical recording medium having on a recording layer a light-transmitting layer formed of an energy ray-curable resin.

### BACKGROUND ART

In late years, there has been a need for an optical recording medium capable of affording still higher recoding density for processing a huge amount of information such as dynamic picture image information, and the research and development have been actively conducted for achieving increased recording density and capacity in an optical recording medium.

One example of such achievements is found in DVDs, in which the wavelength of a recoding and reproducing laser beam is made shorter and the numerical aperture (NA) of an objective lens is made larger so that the diameter of a focal spot produced during recording or reproducing is reduced. Actually in DVDs, the recording and reproducing wavelength λ of 780 nm used in CDs is changed to 650 nm in DVDs, and the numerical aperture (NA) of 0.45 used in CDs to 0.6 in DVDs, whereby a recording capacity increased to 6- to 8-fold that of CDs (4.7GB per side) has been achieved.

However, the increased numerical aperture will raise various problems. For example, the increased numerical aperture decreases the allowance for aberration produced due to an angle by which a disk surface is deviated from the perpendicular to the optical axis of an optical pickup, which is known as a tilt angle. In this relation, an allowance for tilt of an optical recording medium with respect to an optical system, which is known as a tilt margin M, is determined by a numerical aperture NA. In other words, the tilt margin M is proportional to λ/{t × (NA)³} when λ denotes a wavelength of a recording and reproducing laser beam, and t denotes a thickness of a substrate. Therefore, in order to ensure a sufficient tilt margin M, it is required to reduce the thickness t of a substrate.

Accordingly, in DVDs, a sufficient tilt margin is ensured by reducing the substrate thickness to about one half (about 0.6mm) of a typical thickness of conventional CD substrates (about 1.2mm).

Recently, for the purpose of making it possible to record a high quality dynamic picture image for long hours, a system has been developed to achieve a large recording capacity (larger than 20 GB per side) corresponding to more than 4-fold that of DVDs by decreasing the wavelength λ of a recording and reproducing laser beam to about 400nm and increasing the numerical aperture (NA) to 0.85.

In this system, the recording and reproducing laser beam is irradiated not to the substrate side but through a light-transmitting layer formed with a thickness of about 0.1mm. An optical recording medium having such a light-transmitting layer is disclosed, for example, in Japanese Patent Laid-Open Publication No. Hei 10-289489, and the medium disclosed in this patent publication has a light-transmitting layer comprising a photo-curable resin.

### DISCLOSURE OF THE INVENTION

### Objects of the Invention

On the other hand, in conventional optical recording media including CDs and DVDs and the like, an energy ray-curable resin is used for a protective layer, which poses a problem of increased warping of the media due to shrinkage on curing of the resin. Therefore, various studies and attempts have been made to decrease such shrinkage on curing in view of materials. However, since the thickness of the coated film of the energy ray-curable resin for the protective layer is only about 2µm to 20µm, sufficient studies have not been focused on those having a larger thickness.

More specifically, in the case where a light-transmitting layer having a thickness of about 0.1mm (100µm) is formed of an energy ray-curable resin, it will be difficult to solve the problem of shrinkage on curing only by improvement of the resin material.

In view of the problem as above, an object of the present invention is to provide a method for manufacturing an optical recording medium by forming a light-transmitting layer employing an energy ray-curable resin, yet affording superior mechanical properties.

A further object of the present invention is to provide an apparatus for manufacturing an optical recording medium suitable for use in the above-mentioned method.

### Summary of the Invention

After earnest researches, the present inventors have found that, by employing an energy ray-curable resin having a relatively low degree of shrinkage on curing and allowing the resin to cure stepwise, it is possible to disperse the stress generated by the shrinkage on curing of the resin to minimize the stress accumulated in a disk, and thus to obtain an optical recording medium with minimal deformation in the disk and with superior mechanical properties. The present invention thus has been achieved.

The present inventors have further found that, by releasing the stress accumulated in the disk by annealing, and then allowing the resin to cure again, the optical information medium can be obtained with further improved mechanical properties.

The present invention is a method for manufacturing an optical recording medium having, on a supporting substrate, at least one recording layer and a light-transmitting layer on the recording layer, comprising the steps of providing an energy ray-curable resin layer on the recording layer, and irradiating the resin layer with an energy ray at least twice to form a light-transmitting layer.

The present invention is the above-described method for manufacturing an optical recording medium wherein an integrated quantity of light of each energy ray irradiation is increased stepwise between respective two consecutive irradiations.

The present invention is the above-described method for manufacturing an optical recording medium wherein the energy ray is an ultraviolet ray.

The present invention is the above-described method for manufacturing an optical recording medium wherein an annealing step (thermal relaxation step) is conducted between any one energy ray irradiation and a successive energy ray irradiation.

The present invention is the above-described method for manufacturing an optical recording medium wherein the annealing step is conducted at a temperature of 60°C or higher.

The present invention is the above-described method for manufacturing an optical recording medium wherein the thickness of the light-transmitting layer is in a range of 20 to 200µm.

Further, the present invention relates to an apparatus for manufacturing an optical recording medium suitable for use in the above-mentioned method. The apparatus for manufacturing an optical recording medium of the present invention comprises:
coating means for coating a supporting substrate with an energy ray-curable resin to provide an energy ray-curable resin layer;
first energy ray irradiation means for irradiating the energy ray-curable resin layer with an energy ray to cure the resin layer into a half-cured resin layer;
annealing means for heating the half-cured resin layer; and
second energy ray irradiation means for irradiating the annealed, half-cured resin layer with an energy ray to cure the resin layer into a completely cured resin layer.

### BRIEF DESCRIPTION OF THE DRAWINGS

Fig. 1 is a schematic cross section showing an example of an optical disk manufactured by a method of the present invention;
Fig. 2 is a schematic cross section showing another example of an optical disk manufactured by the method of the present invention; and
Fig. 3 is a partially cutaway plan view schematically showing a preferred manufacturing apparatus suitable for use in the manufacturing method of the present invention.

### MODES FOR CARRYING OUT THE INVENTION

A method for manufacturing an optical recording medium (for brevity to be referred to hereinafter as "optical disk") will be described with reference to the drawings. Although the description will be given of a phase change type optical disk as an example, the present invention is not limited to this, but is widely applicable to various optical disks with any type of recording layers, including read-only optical disks, and single-recordable optical disks and the like.

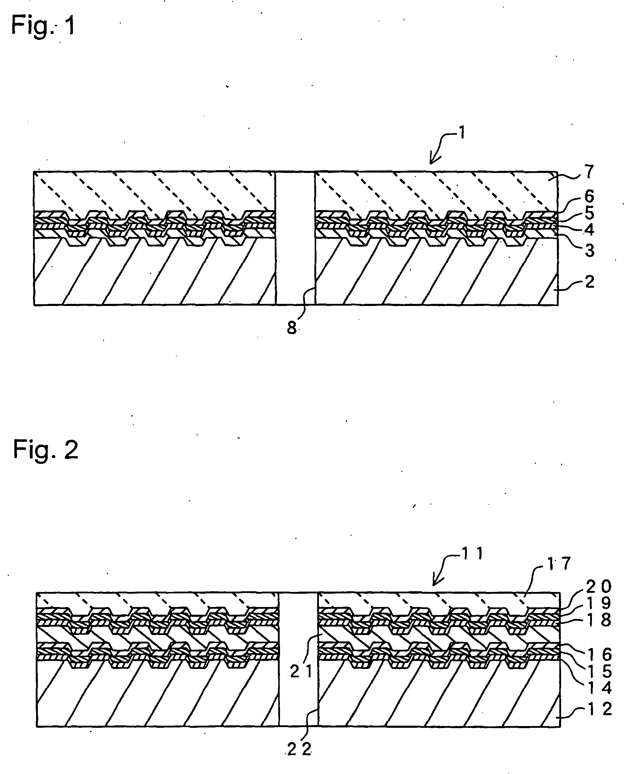

Fig. 1 schematically shows a cross section of an example of an optical disk manufactured by a method of the present invention. In Fig. 1, an optical disk (1) has a supporting substrate (2) having information pits, pregrooves, and other fine scale convex-concave formed on one surface thereof. On this surface, the optical disk (1) has a reflective layer (3), a dielectric layer (4), a recording layer (5), and a dielectric layer (6) formed in this order, and further has a light-transmitting layer (7) on the dielectric layer (6). The disk (1) also has a central hole (8). When using the optical disk (1), a laser beam for recording or reproduction is introduced through the light-transmitting layer (7).

The supporting substrate (2) has a thickness of 0.3 to 1.6mm, preferably of 0.5 to 1.3mm, and includes information pits, pregrooves, and other fine scale convex-concave formed on the surface on which the recording layer (5) is formed.

The supporting substrate (2) is not required to be optically transparent and may be used various plastic materials including polycarbonate resins, acrylic resins such as polymethyl methacrylate (PMMA), and polyolefine resins and the like. Such flexible materials are particularly useful in the present invention since they can control the warping. It should be noted, however, that glass, ceramics or metals and the like may be also used for the supporting substrate. If a plastic material is employed, the pattern of the convex-concave in the surface will be often produced by injection molding, whereas the pattern will be formed by a photopolymer process (2P process) in the case of any material other than plastics.

The reflective layer (3) is usually formed by a sputtering process on the supporting substrate (2). As a material for the reflective layer, a metallic element, semi-metallic element, semiconductor element or a compound thereof may be used singly or compositely. More specifically, the material may be selected from known materials for the reflective layers such as Au, Ag, Cu, Al, and Pd. The reflective layer is preferably formed as a thin film with a thickness of 20 to 200nm.

The dielectric layer (4), the recording layer (5), and the dielectric layer (6) are formed in this order by sputtering process on the reflective layer (3), or on the supporting substrate (2) in the case that no reflective layer is provided.

The recording layer (5) is formed of a material changing reversibly by irradiation of laser beam between the crystalline state and the amorphous state, and exhibiting different optical properties between these states. Examples of such material include Ge-Sb-Te, In-Sb-Te, Sn-Se-Te, Ge-Te-Sn, In-Se-Tl, and In-Sb-Te. Further, to any such matrial, a trace of at least one metal selected from Co, Pt, Pd, Au, Ag, Ir, Nb, Ta, V, W, Ti, Cr, Zr, Bi, In and the like may be added. A trace of reductive gas such as nitrogen also may be added.

There is no limitation to the thickness of the recording layer (5), which is for example in a range of about 3 to 50nm.

The dielectric layers (4) and (6) are formed on the top and under surfaces of the recording layer (5), respectively, so as to sandwich the same. The dielectric layers (4) and (6) have not only a function of protecting the recording layer (5) mechanically and chemically but also a function as an interference layer for adjusting the optical properties. The dielectric layers (4) and (6) may each consist of either a single layer or a plurality of layers.

The dielectric layers (4) and (6) is preferably formed of an oxide, a nitride, a sulfide, or a fluoride or a composite thereof, containing at least one metal selected from Si, Zn, Al, Ta, Ti, Co, Zr, Pb, Ag, Zn, Sn, Ca, Ce, V, Cu, Fe, and Mg. Further, the dielectric layers (4) and (6) preferably have an extinction coefficient k of 0.1 or less.

There is no limitation to the thickness of the dielectric layer (4), which is preferably for example in a range of about 20 to 150nm. There is no limitation to the thickness of the dielectric layer (6), either, which is preferably for example in a range of about 20 to 200nm. Setting the thicknesses of the dielectric layers (4) and (6) in these ranges makes it possible to adjust reflection.

The light-transmitting layer (7) is formed on the dielectric layer (6) by using energy ray-curable resin.

The energy ray-curable resin should be optically transparent, exhibit low optical absorption or reflection in the laser wavelength range to be used, and have low birefringence, and is selected from ultraviolet ray-curable resins, electron ray-curable resins and the like on these conditions.

Specifically, the energy ray-curable resin is constituted preferably of the ultraviolet- (electro-) curable compound or its composition for polymerization. Examples include monomers, oligomers, polymers and the like in which groups to be crosslinked or polymerized by irradiation with UV rays, such as acrylic type double bonds such as in ester compounds of acrylate and methacrylate, epoxy acrylates and urethane acrylates, allyl type double bonds such as in diallyl phthalate, and unsaturated double bonds such as in maleic acid derivatives and the like have been contained or introduced into a molecule. These are preferably multifunctional, particularly trifunctional or more, and may be used alone or in combination thereof.

The ultraviolet-curable monomer is preferably a compound with a molecular weight of less than 2000, and the oligomer is preferably a compound with a molecular weight of 2000 to 10000. These include styrene, ethyl acrylate, ethylene glycol diacrylate, ethylene glycol dimethacrylate, diethylene glycol diacrylate, diethylene glycol methacrylate, 1,6-hexane glycol diacrylate, 1,6-hexane glycol dimethacrylate etc., and particularly preferable examples include pentaerythritol tetra(meth)acrylate, pentaerythritol (meth)acrylate, trimethylolpropane tri(meth)acrylate, trimethylolpropane di(meth)acrylate, (meth)acrylate of phenol ethylene oxide adduct, etc. Besides, the ultraviolet-curable oligomer includes oligoester acrylate, acrylic modified urethane elastomer etc.

As the ultraviolet-curable material, a composition containing epoxy resin and a photo-cation polymerization catalyst is also preferably used. The epoxy resin is preferably alicyclic epoxy resin, particularly the resin having 2 or more epoxy groups in the molecule. The alicyclic epoxy resin is preferably one or more of the following resins: 3,4-epoxycyclohexyl methyl-3,4-epoxycyclohexane carboxylate, bis-(3,4-epoxycyclohexylmethyl) adipate, bis-(3,4-epoxycyclohexyl) adipate, 2-(3,4-epoxycyclohexyl-5,5-spiro-3,4-epoxy) cyclohexane-metha-dioxane, bis(2,3-epoxycyclopentyl) ether and vinyl cyclohexene dioxide etc. Although the epoxy equivalent of alicyclic epoxy resin is not particularly limited, it is preferably 60 to 300, more preferably 100 to 200 for attaining excellent curable properties.

The photo-cation polymerization catalyst used may be any of known ones and is not particularly limited. For example, it is possible to use one or more of the followings: metal fluoroborates and boron trifluoride complexes, bis(perfluoroalkyl sulfonyl) methane metal salts, aryl diazonium compounds, aromatic onium salts of the group 6A elements, aromatic onium salts of the group 5A elements, dicarbonyl chelate of the groups 3A to 5A elements, thiopyrylium salts, the group 6A elements having MF6 anions (M is P, As or Sb), triaryl sulfonium complex salts, aromatic iodonium complex salts, aromatic sulfonium complex salts etc., and it is particularly preferable to use one or more of the followings: polyaryl sulfonium complex salts, aromatic sulfonium salts or iodonium salts of halogen-containing complex ions, and aromatic onium salts of the group 3A elements, the group 5A elements and the group 6A elements.

The radiation curable resin used for the light-transmitting layer preferably has a viscosity of 1,000 to 10,000cp (at 25°C).

According to the present invention, an energy ray-curable resin is applied on the dielectric layer (6) to provide an uncured energy ray-curable resin layer thereon. The application may be performed by spin coating process.

In the next step, the uncured energy ray-curable layer is irradiated with an energy ray for a plurality of times so as to cure the resin stepwise. Specifically, the irradiation is performed at least twice, an irradiation for curing the resin to the half-cured state but not to the completely cured state and another irradiation for curing the resin from the half-cured state to the completely cured state. Either ultraviolet ray or electron ray may be used as the energy ray depending on the used resin.

The first energy ray irradiation is performed in such an integrated quantity of light as to leave tackiness on the surface of the resin layer, and to cure the resin up to the half-cured state. Curing the resin to the half-cured state is enabled by shortening the irradiation time or reducing the irradiation intensity, depending on the resin material, in comparison with the case where the resin is cured completely by one irradiation. Such energy ray irradiation is conducted once, or twice or more before the resin is completely cured. If two or more irradiations before complete curing of the resin are performed, the integrated quantity of light is increased stepwise between respective consecutive two energy beam irradiations.

Then, the final energy beam irradiation is conducted for curing the resin completely, with an integrated quantity of light increased in comparison with any of the integrated quantities of light used in the previous energy ray irradiations, so that the resin is cured to the completely cured state. This complete curing is enabled by lengthening the irradiation time or increasing the irradiation intensity in comparison with any of the irradiations before complete curing of the resin.

The integrated quantity of light used in the respective energy ray irradiations depends on the resin material or the thickness of the resin layer and the like, and is adjusted to be about 5 to 300mJ/cm² for the first energy ray irradiation, and about 500 to 5000mJ/cm² for the second energy ray irradiation.

Curing the resin stepwise in this manner makes it possible to decrease the stress accumulated at a time in the disk due to the shrinkage on curing, and hence the stress ultimately accumulated in the disk is decreased. As a result, even if the light-transmitting layer (7) has a large thickness of no less than 20µm but no more than 200µm, particularly no less than 70µm but no more than 150µm, more particularly no less than 75µm but no more than 150µm, it is possible to produce a disk with superior mechanical properties.

The stress due to shrinkage on curing becomes maximum at the moment of the curing of the resin and then is relaxed gradually as the passage of time. Therefore, the stress accumulated in the disk due to the shrinkage on curing can be decreased further, by releasing once the stress accumulated in the disk followed by conducing the next curing. Since it will not be productive if the resin is left in the half-cured state for a long period of time before the stress is released, it is also possible to release the stress in a short period of time by conducting an annealing treatment before curing the resin by irradiating the resin again with an energy ray. In other words, according to the present invention, a more preferable result can be obtained by conducting an annealing treatment after one energy ray irradiation and before the following energy ray irradiation. If three or more energy ray irradiations are to be performed, it is preferable, in view of the release of stress due to shrinkage on curing, to conduct an annealing treatment every time one irradiation is completed, namely between the first and second irradiations, between the second and third irradiations and onwards.

The annealing temperature is preferably 60°C or higher, and more preferably 80°C or higher. The annealing temperature of 80°C or higher enables the complete release of stress to be done more quickly. The upper limit of annealing temperature depends on a material used for the supporting substrate, but generally and preferably is a temperature at least 10°C lower than the glass transition temperature Tg of the material used. The annealing time, depending on the annealing temperature, is preferably one to five minutes in terms of production efficiency.

By conducting the annealing treatment in this manner, it is possible to produce a disk having more superior mechanical properties.

According to the present invention, it is also possible that an uncured energy ray-curable resin layer is formed to a thickness corresponding to a part of a target thickness of the light-transmitting layer (7), this resin is irradiated with an energy ray to be half-cured, the same resin is again applied on the half-cured resin layer to a thickness corresponding to the remainder of the target thickness, and then an energy beam is irradiated to completely cure the half-cured resin layer and simultaneously to cure the uncured resin layer.
In this manner, mixing occurs in the interface between the two resin layers, and thereby the adhesion between the resin layers can be enhanced.

In the foregoing, the manufacturing method of the present invention has been described for the optical disk shown in Fig. 1 as an example. It should be noted that the manufacturing method of the present invention also may be applied to a single-side two-layer optical disk as shown in Fig. 2.

In Fig. 2, an optical disk (11) has a supporting substrate (12) having information pits, pregrooves, and other fine scale convex-concave formed on one surface thereof. On this surface, the optical disk (11) has a dielectric layer (14) for second recording layer, a second recording layer (layer 1) (15), a dielectric layer (16) for second recording layer, a space layer (21), a dielectric layer (18) for first recording layer, a first recording layer (layer 0) (19), and a dielectric layer (20) for first recording layer provided in this order, and further has a light-transmitting layer (17) on the dielectric layer (20). The disk (11) also has a central hole (22). Though not shown in the drawing, reflective layers may be provided between the supporting substrate (12) and the dielectric layer (14), and between the space layer (21) and the dielectric layer (18), respectively. When using the optical disk (11), a laser beam for recording or reproduction is introduced through the light-transmitting layer (17).

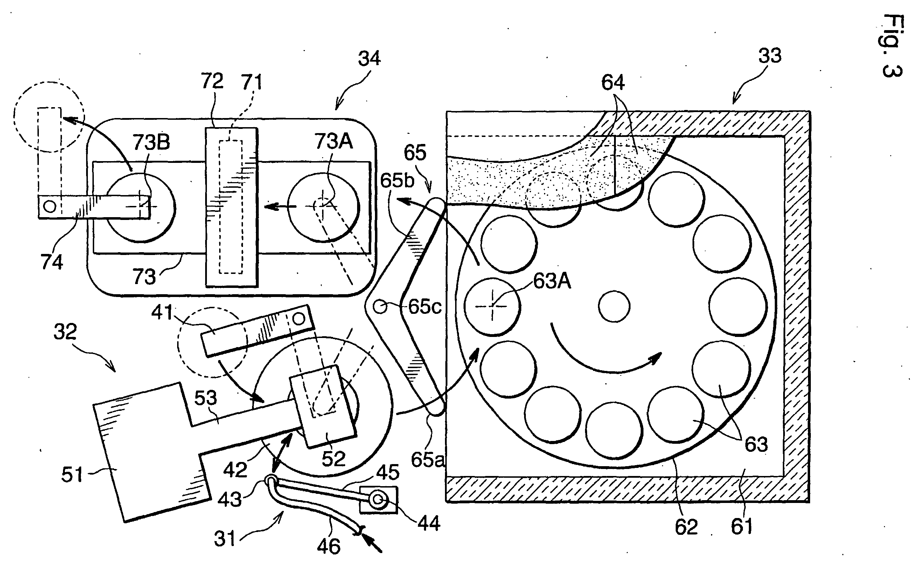

Next, a preferred manufacturing apparatus usable in the method for manufacturing an optical recording medium according to the present invention will be described with reference to Fig. 3. Fig. 3 is a partially cutaway plan view schematically showing a preferred manufacturing apparatus suitable for use in the manufacturing method of the present invention.

In Fig. 3, a manufacturing apparatus for an optical recording medium includes a spin coating unit (31) for coating a supporting substrate with an energy ray-curable resin to provide an energy ray-curable resin layer, a first ultraviolet ray irradiation unit (32) for irradiating the energy ray-curable resin layer with an energy ray to cure the same into a half-cured resin layer, an annealing unit (33) for heating the half-cured resin layer, and a second ultraviolet ray irradiation unit (34) for irradiating the half-cured resin layer with an energy ray to cure the same into a completely cured resin layer.

The spin coating unit (31) includes a disk feeder (41) for feeding a disk to be formed with a light-transmitting layer, a horizontal rotary table (42) for carrying and rotating a disk, and a discharge nozzle (43) for dropping an energy ray-curable resin liquid onto the disk surface. The disk feeder (41) is provided at the tip end thereof with a vacuum pad for suction holding a disk, and is capable of transporting and feeding a disk by vertical movement and horizontal turning movement of 90 degrees. The discharge nozzle (43) is attached to a horizontal arm (45) fixed to a reversibly rotating vertical rotating shaft (44), so that the discharge nozzle (43) rotates horizontally along with rotation of the vertical rotating shaft (44). A liquid to be applied is supplied to the discharge nozzle (43) through a liquid supply tube (46) and is dropped from the tip end of the nozzle.

The first ultraviolet ray irradiation unit (32) includes a body (51), an irradiation head (52) arranged above a disk mounted on the rotary table (42), and a connecting cylinder (53) that connects the body (51) with the irradiation head (52). A super-high pressure mercury lamp is provided as an ultraviolet ray source within the body (51). A condensing and emitting optical system is further provided within the body (51) so that an ultraviolet ray from the super-high pressure mercury lamp is condensed and emitted as an ultraviolet beam directed to the connecting cylinder (53). The connecting cylinder (53) has a cylindrical shape and an integrator lens is incorporated therein so that the ultraviolet beam passes through the cylinder (53) and enters the irradiation head (52). The irradiation head (52) has a reflecting plate incorporated therein so that the ultraviolet beam incident from the cylinder (53) is reflected back at 90 degrees and directed to a disk below.

The annealing unit (33) includes an annealing chamber (61), and a coating hand (65) for transporting a disk on the rotary table (42) of the spin coating unit (31) to a predetermined position in the annealing chamber (61) and simultaneously transporting an annealed disk to the second ultraviolet ray irradiation unit (34) for the following process.

The annealing chamber (61) is provided with a rotary table (62), and an appropriate number of infrared-ray flat panel heaters (64) arranged over the rotary table (62). The rotary table (62) is provided with twelve disk support portions (63) near the outer periphery thereof for supporting twelve disks at intervals of 30 degrees, and rotates intermittently 30 degrees at a time around the center of the table (62) counterclockwise in the example shown. An appropriate device is provided below the rotary table (62) for rotating the same.

The coating hand (65) is rotatable around its vertical shaft (65c) in a range of 120 degrees. The coating hand (65) rotates 60 degrees clockwise from the state as shown in Fig. 3, thereby one arm (65a) of the coating hand (65) is positioned above a disk on the rotary table (42). In this position, the disk on the rotary table (42) is picked up by a vacuum suction mechanism provided at the tip end of the arm (65a). The coating hand (65) then rotates 120 degrees counterclockwise and the arm (65a) is positioned at a predetermined position above the rotary table (62), namely above the disk supporting portion indicated by 63A. In this position, the disk is released from suction and set in one of disk supporting portions (63).

The other arm (65b) of the coating hand (65) is rotated 60 degrees clockwise from the state as shown in Fig. 3 and positioned above the disk supporting portion indicated by 63A. In this position, an annealed disk on the disk supporting portion indicated by 63A is picked up by a vacuum suction mechanism provided at the tip end of the arm (65b). The coating hand (65) then rotates 120 degrees counterclockwise, and the arm (65b) is thereby brought to a position indicated by 73A on a disk moving mechanism (73) of the second ultraviolet ray irradiation unit (34) to be described below. In this position, the disk is released from the suction and set at the position indicated by 73A on the disk moving mechanism (73).

The second ultraviolet ray irradiation unit (34) includes an ultraviolet lamp (71) supported by an appropriate support member (72), the disk moving mechanism (73) for moving a disk linearly to the left-hand side, and a disk discharger (74) for discharging a disk on which a light-transmitting layer has been formed. The disk moving mechanism (73), particulars of which are not shown here, is a well known mechanism that is usually provided in a conveyor-type ultraviolet ray irradiation unit. The disk is moved from the position 73A to the position 73B, and during this movement the disk is irradiated with an ultraviolet ray from the ultraviolet lamp (71). The disk discharger (74) has a similar mechanism to that of the disk feeder (41).

According to the present invention, a disk having at least one recording layer on which a light-transmitting layer is to be formed is placed on the rotary table (42) by the disk feeder (41) and held by suction. A predetermined amount of an energy ray-curable resin liquid is dropped from the tip end of the discharge nozzle (43) onto the surface of the disk placed on the rotary table (42). During dropping of the liquid, the disk may be either stationary or rotated. The disk is then rotated at a high speed to form a resin layer with a uniform thickness on the surface of the disk.

The uncured resin layer is irradiated for the first time with an ultraviolet ray from the irradiation head (52) to cure the resin into a desired half-cured state. During this irradiation, the disk continues to rotate.

The rotation of the disk is stopped and the disk is picked up by the one arm (65a) of the coating hand (65) and is set at a predetermined position on the rotary table (62) of the annealing unit (33), namely at one of the disk support portions (63) indicated by 63A. The rotary table' (62) is intermittently rotated counterclockwise in the example shown here by 30 degrees at a time for 360 degrees, while the disk is annealed in the anneal chamber (61) at a predetermined temperature for a predetermined time. The temperature and time used herein may be adjusted as required.

The annealed disk that has returned to the position 63A is picked up by the other arm (65b) of the coating hand (65), and set at the position indicated by 73A of the disk moving mechanism (73) in the second ultraviolet ray irradiation unit (34). The disk is moved linearly from the position 73A to the position 73B, while being irradiated with an ultraviolet ray from the ultraviolet lamp (71) to cure the resin into a completely cured state. Herewith, a light-transmitting layer is formed.

The apparatus described above is capable of performing two ultraviolet ray irradiations and an annealing between these irradiations. However, it is also possible to perform three or more ultraviolet ray irradiations and annealing treatments between two consecutive irradiations by providing the apparatus with more annealing units and ultraviolet ray irradiation units, or using the same apparatus and causing the same to repeat a series of annealing treatments and ultraviolet ray irradiations.

### EXAMPLES

The present invention will be described in more detail by way of the following examples, but the present invention is not limited thereto.

### [Example 1]

An optical disk sample was prepared according to the following procedures.

A 100nm thick reflective layer of an Ag-based alloy was formed by sputtering on the surface of a disk-shaped supporting substrate (made of polycarbonate and having a diameter of 120mm and thickness of 1.1mm) having pre-grooves formed thereon. The depth of the pre-grooves was λ/10 in the optical path length at a wavelength λ of 405nm, and the substrate was formed as a land and groove substrate having a recording track pitch of 0.3µm.

Subsequently, a 30nm thick dielectric layer was formed by sputtering on the surface of the reflective layer, using a ZnS (80 mol%)-SiO₂ (20 mol%) target.

Then, a 12nm thick recording layer was formed by sputtering on the surface of this dielectric layer, using an alloy target consisting of a phase-changing material. The composition of the recording layer was based on GeSbTe.

Subsequently, a 100nm thick dielectric layer was formed by sputtering on the surface of the recording layer, using a ZnS (80 mol%)-SiO₂ (20 mol%) target. Mechanical properties of the disk thus obtained (warping angle in the disk's radial direction and warping angle in the disk's circumferential direction) were measured with a machinery accuracy measurement instrument, DC-1010C manufactured by Cores Co., Ltd.

After the measurement, an ultraviolet ray-curable resin primarily composed of urethane acrylate (with a shrinkage on curing of 5.5% and a viscosity of 5000cP at 25°C) was applied by spin coating on the surface of the top surface of dielectric layer, and was spun at 2000rpm for eight seconds to form a 100µm thick uncured resin layer.

The ultraviolet'ray-curable resin layer thus formed was irradiated with an ultraviolet ray at an integrated quantity of UV light of 140mJ/cm² to provide a half-cured resin layer. The resin layer was then irradiated with an ultraviolet ray at an integrated quantity of UV light of 3000mJ/cm² to cure the resin layer completely, thus forming a light-transmitting layer. Mechanical properties of the disk sample thus prepared (warping angle in the disk's radial direction and warping angle in the disk's circumferential direction) were measured with the aforementioned instrument DC-1010C.

### [Example 2]

The same procedures as in Example 1 were repeated up to the formation of an uncured resin layer. The ultraviolet ray-curable resin layer was irradiated with an ultraviolet ray at an integrated quantity of UV light of 140mJ/cm² to provide a half-cured resin layer. The half-cured resin layer was then annealed at 60°C for three minutes, and thereafter the resin layer was irradiated with an ultraviolet ray at an integrated quantity of UV light of 3000mJ/cm² to cure the resin layer completely and thereby form a light-transmitting layer. Mechanical properties of the disk sample thus produced were measured with the aforementioned instrument DC-1010C.

### [Comparative Example 1]

The same procedures as in Example 1 were repeated up to the formation of an uncured resin layer. The resin layer was irradiated with an ultraviolet ray at an integrated quantity of UV light of 3000mJ/cm² without being cured to the half-cured state, so that the resin layer was cured completely to form a light-transmitting layer. Mechanical properties of the disk sample thus produced were measured with the aforementioned instrument DC-1010C.

### [Example 3]

A disk sample was produced in the same manner as in Example 1 except that a resin having slightly higher shrinkage on curing (shrinkage on curing of 5.9% and viscosity of 5800cP at 25°C) than the resin used in Example 1 was used as the ultraviolet ray-curable resin principally composed of urethane acrylate. Mechanical properties of the disk sample thus produced were measured with the aforementioned instrument DC-1010C.

### [Example 4]

Using the same resin as used in Example 3 as the ultraviolet ray-curable resin, a disk sample was produced in the same manner as in Example 2 except that annealing was conducted at a temperature of 80°C. Mechanical properties of the disk sample thus produced were measured with the aforementioned instrument DC-1010C.

### [Comparative Example 2]

A disk sample was produced in the same manner as in Comparative Example 1 except that the same resin as used in Example 3 was used as the ultraviolet ray-curable resin. Mechanical properties of the disk sample thus produced were measured with the aforementioned instrument DC-1010C.

**Table 1**

| | before formation of the light-transmitting layer | | after formation of the light-transmitting layer | | variation | |
|---|---|---|---|---|---|---|
| | R-Skew deg. | T-Skew deg. | R-Skew deg. | T-Skew deg. | ΔR-Skew deg. | ΔT-Skew deg. |
| Example 1 | -0.256 | 0.040 | 0.153 | 0.076 | 0.409 | 0.036 |
| Example 2 | -0.249 | 0.038 | 0.016 | 0.055 | 0.265 | 0.017 |
| Comparative Example 1 | -0.260 | 0.043 | 0.382 | 0.112 | 0.642 | 0.069 |
| Example 3 | -0.259 | 0.039 | 0.213 | 0.060 | 0.472 | 0.021 |
| Example 4 | -0.253 | 0.039 | 0.144 | 0.045 | 0.397 | 0.006 |
| Comparative Example 2 | -0.248 | 0.045 | 0.473 | 0.118 | 0.721 | 0.073 |

The results of the measurements are collectively shown in Table 1. In Table 1, R-Skew (deg.) denotes a warping angle (degrees) in the radial direction of the disk, and T-Skew (deg.) denotes a warping angle (degrees) in the circumferential direction of the disk. Each warping angle was measured with the light-transmitting layer side of the disk facing the laser head of the measurement instrument. Warping that is concave to the light-transmitting layer side is represented by a positive value, whereas warping that is convex to the light-transmitting layer side is represented by a negative value.

ΔR-Skew denotes a variation between warping angles before and after the formation of the light-transmitting layer, that is, ΔR-Skew = (R-Skew after the formation of the light-transmitting layer) - (R-Skew before the formation of the light-transmitting layer). Similarly, ΔT-Skew = (T-Skew after the formation of the light-transmitting layer) - (T-Skew before the formation of the light-transmitting layer).

In Examples 1 and 2 and Comparative Example 1, the values of R-Skew and T-Skew before the formation of the light-transmitting layer should have been all the same, but in fact there were slight scatters. Also in Examples 3 and 4 and Comparative Example 2, there were slight scatters.

As seen from Table 1, in all the disk samples of Examples 1 through 4, the shrinkage on curing of the resin due to irradiation of an ultraviolet ray was substantially reduced and the variation between the warping angles before and after the formation of the light-transmitting layer was small, and the disk samples exhibited superior mechanical properties. Particularly, in Example 4, even though the resin having a relatively high shrinkage on curing was used, the disk sample exhibited superior mechanical properties as a merit of the correct annealing treatment applied to the resin.

### INDUSTRIAL APPLICABILITY

According to the present invention, it is possible to manufacture an optical recording medium having superior mechanical properties by forming a light-transmitting layer with a thickness of about 0.1mm (100µm) using a photo-curable resin. Further, according to the present invention, it is possible to provide an apparatus for manufacturing an optical recording medium suitable for use in such method.

## Claims

1. A method for manufacturing an optical recording medium having, on a supporting substrate, at least one recording layer and a light-transmitting layer on the recording layer, comprising the steps of providing an energy ray-curable resin layer on the recording layer, and irradiating the resin layer with an energy ray at least twice to form the light-transmitting layer.

2. The method for manufacturing an optical recording medium according to claim 1, wherein an integrated quantity of light of each energy ray irradiation is increased stepwise between respective two consecutive irradiations.

3. The method for manufacturing an optical recording medium according to claim 1, wherein the energy ray is an ultraviolet ray.

4. The method for manufacturing an optical recording medium according to claim 1, wherein an annealing step (thermal relaxation step) is conducted between any one energy ray irradiation and a successive energy ray irradiation.

5. The method for manufacturing an optical recording medium according to claim 4, wherein the annealing step is conducted at a temperature of 60°C or higher.

6. The method for manufacturing an optical recording medium according to claim 1, wherein the thickness of the light-transmitting layer is in a range of 20 to 200µm.

7. An apparatus for manufacturing an optical recording medium comprising:
coating means for coating a supporting substrate with an energy ray-curable resin to provide an energy ray-curable resin layer;
first energy ray irradiation means for irradiating the energy ray-curable resin layer with an energy ray to cure the resin layer into a half-cured resin layer;
annealing means for heating the half-cured resin layer; and
second energy ray irradiation means for irradiating the annealed, half-cured resin layer with an energy ray to cure the resin layer into a completely cured resin layer.
